(19) Europäisches Patentamt / European Patent Office / Office européen des brevets

(11) **EP 3 405 780 B1**

(12) **EUROPÄISCHE PATENTSCHRIFT**

(45) Veröffentlichungstag und Bekanntmachung des Hinweises auf die Patenterteilung:
**17.05.2023   Patentblatt 2023/20**

(21) Anmeldenummer: **17705027.5**

(22) Anmeldetag: **24.01.2017**

(51) Internationale Patentklassifikation (IPC):
**G01N 29/02** *(2006.01)*      **G01N 29/22** *(2006.01)*
**G01N 29/24** *(2006.01)*      **G01F 1/66** *(2022.01)*

(52) Gemeinsame Patentklassifikation (CPC):
**G01N 29/222; G01F 1/662; G01N 29/022;**
**G01N 29/2462;** G01F 1/667; G01N 2291/0423;
G01N 2291/0428

(86) Internationale Anmeldenummer:
**PCT/EP2017/051448**

(87) Internationale Veröffentlichungsnummer:
**WO 2017/125614 (27.07.2017 Gazette 2017/30)**

(54) **VERFAHREN ZUR BESTIMMUNG VON EIGENSCHAFTEN EINES MEDIUMS UND VORRICHTUNG ZUR BESTIMMUNG VON EIGENSCHAFTEN EINES MEDIUMS**

METHOD OF DETERMINING OF PROPERTIES OF A MEDIUM AND DEVICE FOR DETERMINING PROPERTIES OF A MEDIUM

PROCÉDÉ DE DÉTERMINATION DE CARACTÉRISTIQUES D'UN MILIEU ET DISPOSITIF POUR LA DÉTERMINATION DE CARACTÉRISTIQUES D'UN MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2016   DE 102016200948**

(43) Veröffentlichungstag der Anmeldung:
**28.11.2018   Patentblatt 2018/48**

(73) Patentinhaber: **Endress+Hauser Flow Deutschland AG**
**96450 Coburg (DE)**

(72) Erfinder: **RAUTENBERG, Jens**
**59590 Geseke (DE)**

(74) Vertreter: **Maikowski & Ninnemann Patentanwälte Partnerschaft mbB**
**Postfach 15 09 20**
**10671 Berlin (DE)**

(56) Entgegenhaltungen:
**EP-A2- 2 343 548     DE-A1-102009 048 646**

• JACKSON G A ET AL: "A three-path ultrasonic flowmeter for small-diameter pipelines", JOURNAL OF PHYSICS E. SCIENTIFIC INSTRUMENTS, IOP PUBLISHING, BRISTOL, GB, Bd. 22, Nr. 8, 1. August 1989 (1989-08-01) , Seiten 645-650, XP020019060, ISSN: 0022-3735, DOI: 10.1088/0022-3735/22/8/022
• JACKSON G A ET AL: "A three-path ultrasonic flow meter with fluid velocity profile identification", MEASUREMENT SCIENCE AND TECHNOLOGY, IOP, BRISTOL, GB, Bd. 2, Nr. 7, 1. Juli 1991 (1991-07-01), Seiten 635-642, XP020065054, ISSN: 0957-0233, DOI: 10.1088/0957-0233/2/7/010

## Beschreibung

Die vorliegende Erfindung betrifft ein Verfahren zur Bestimmung von physikalischen und/oder chemischen und/oder biologischen Eigenschaften eines Mediums nach dem Oberbegriff des Anspruchs 1 sowie eine Vorrichtung zur Bestimmung von physikalischen und/oder chemischen und/oder biologischen Eigenschaften eines Mediums nach dem Oberbegriff des Anspruchs 9.

Das Medium, dessen physikalische und/oder chemische und/oder biologische Eigenschaften durch ein gattungsgemäßes Verfahren zu bestimmen sind, ist ein Fluid, vorzugsweise ein Gas, eine Flüssigkeit oder ein weiches Material, insbesondere ein hochviskoses, teigartiges oder pastöses Medium. Bei den zur Bestimmung der Eigenschaften genutzten akustischen Wellen handelt es sich beispielsweise um Ultraschallwellen, die von einem entsprechenden Sender durch ein Sendesignal erzeugt werden.

Bei einem bekannten Verfahren zur Bestimmung physikalischer, chemischer und/oder biologischer Eigenschaften eines Mediums werden z.B. wenigstens zwei akustische Wellen durch ein Sendesignal erzeugt, die sich zumindest teilweise durch das Medium entlang identischer oder unterschiedlicher Ausbreitungsrichtungen ausbreiten, bevor sie jeweils an einem in der jeweiligen Ausbreitungsrichtung liegendem Empfänger empfangen werden. Beispielsweise werden akustische Wellen in einem strömenden Medium einerseits in eine erste Ausbreitungsrichtung in Strömungsrichtung des Mediums und andererseits in eine zweite Ausbreitungsrichtung entgegen der Strömungsrichtung des Mediums erzeugt. Aus den an den jeweiligen Empfängern generierten Empfangssignalen kann dann eine Laufzeitdifferenz ermittelt und hieraus z. B. auf die (mittlere) Strömungsgeschwindigkeit des Mediums geschlossen werden. Werden alternativ oder zusätzlich noch absolute Laufzeiten einer akustischen Welle von einem Sender zu einem Empfänger mit Hilfe der Empfangssignale ermittelt, können weitere Rückschlüsse über physikalische, chemische und/oder biologische Eigenschaften des Mediums gewonnen werden, wie z. B. dessen Dichte, Temperatur oder Zusammensetzung.

Aus der WO 2008/034878 A2 ist eine Vorrichtung bekannt, bei der akustische Oberflächenwellen erzeugt werden, die in einem Wellenleiter Volumenschallwellen in das jeweilige Medium einkoppeln. Durch wiederholte Auskopplung von Oberflächenwellen an denjenigen Stellen, an denen die Volumenschallwelle auf eine das Medium berandende Wandung trifft, werden an einem Empfänger wiederum akustische Oberflächenwellen empfangen, deren Laufzeiten und Laufzeitendifferenzen charakteristisch für das Medium sowie dessen physikalische, chemische und/oder biologische Eigenschaften sind.

Bei einem aus der WO 2008/034878 A2 beschriebenen Vorrichtung sowie dem damit umgesetzten Verfahren bekommt somit der Verarbeitung der an den jeweiligen Empfängern erzeugten Empfangssignale für eine empfangene akustische Welle - hier eine akustische Oberflächenwelle - eine entscheidende Bedeutung zu. So ist die Ermittlung einer Laufzeitdifferenz oder einer absoluten Laufzeit aus an den Empfängern erzeugten Empfangssignalen keineswegs trivial und unter Umständen mit erheblichem rechnerischem Aufwand verbunden. Je nach aus den Empfangssignalen zu extrahierender Information werden unterschiedlichste Verfahren zur Signalverarbeitung eingesetzt. Beispielsweise ist es bekannt, modulierte Sendesignale zu nutzen, um anhand der gewonnenen Empfangssignale verlässlicher auf die Eigenschaften des Mediums schließen zu können.

Im Übrigen gibt es viele Ultraschallverfahren (integriert oder clamp-on) zur Durchflussmessung in Rohren. Clamp-On-Systeme werden von außen am Rohr angebracht und verändern damit nicht den Strömungsquerschnitt. Die Schallwellen durchqueren das Rohr stets zentrisch, womit zwar das gesamte Strömungsprofil erfasst, eine Strömungsprofilkorrektur in der Regel aber nicht möglich ist. Hochgenaue Durchflussmessungen sind somit nur bei bekannten Medien und gleichzeitiger Temperatur- und/oder Schallgeschwindigkeitsmessung möglich. Gängige Mehrstrahlverfahren, wie sie z.B. aus der DE 195 03 714 A1, der EP 2 072 972 A1, der EP 2 386 835 A1 oder US 4,300,401 A hervorgehen, können zwar das Strömungsprofil detaillierter erfassen, arbeiten aber in der Regel nicht ohne Beeinflussung des Strömungsprofils, da Sender und/oder Empfänger zur Platzierung der Schallpfade in die Rohrwand eingebracht werden.

Ein Verfahren nach dem Oberbegriff des Anspruchs 1 und eine Vorrichtung nach dem Oberbegriff des Anspruchs 9 sind sowohl in EP 2343548 als auch in DE 102009048646 offenbart.

Es ist daher Aufgabe der Erfindung in dieser Hinsicht ein verbessertes Verfahren und eine in dieser Hinsicht verbesserte Vorrichtung zur Bestimmung von physikalischen, chemischen und/oder biologischen Eigenschaften eines Mediums bereitzustellen.

Diese Aufgabe wird sowohl mit einem Verfahren des Anspruchs 1 als auch mit einer Vorrichtung des Anspruchs 9 gelöst.

Mögliche vorteilhafte Ausführungsvarianten sind insbesondere durch die Unteransprüche gegeben.

Erfindungsgemäß ist ein Verfahren zur Bestimmung von physikalischen, chemischen und/oder biologischen Eigenschaften eines Mediums mithilfe wenigstens zweier Sender-Empfänger-Paare und auf Basis wenigstens einer ersten und einer zweiten akustischen Welle vorgeschlagen. Dabei soll sich die erste akustische Welle zumindest teilweise zwischen einem ersten Sender-Empfänger-Paar durch das Medium ausgebreitet haben und sich die zweite akustische Welle zumindest teilweise zwischen einem zweiten Sender-Empfänger-Paar durch das Medium ausgebreitet haben, wobei das Medium an eine innere Mantelfläche eines längserstreckten und quer zu seiner Längserstreckungsrichtung gewölbten Leitelementes angrenzt und wobei

a. mittels eines Senders eines jeden Sender-Empfänger Paares Oberflächenwellen an einer Mantelfläche des Leitelements angeregt werden,

b. mittels eines Empfängers eines jeden Sender-Empfänger-Paares Oberflächenwellen empfangen werden, die zumindest teilweise auf eine erste oder zweite akustische Welle zurückgehen, welche durch sich an der Mantelfläche ausbreitende akustische Oberflächenwellen angeregt wurde, sich im angrenzenden Medium ausgebreitet hat und zumindest teilweise wieder als Oberflächenwelle in die Mantelfläche des Leitelements eingekoppelt hat,

c. mittels der an den unterschiedlichen Empfängern der ersten und zweiten Sender-Empfänger-Paare empfangenen Oberflächenwellen physikalische, chemische und/oder biologische Eigenschaften des Mediums bestimmt werden,

d. von einem Sender des ersten Sender-Empfänger-Paares Oberflächenwellen an der Mantelfläche des Leitelements angeregt werden, deren Hauptausbreitungsrichtung parallel zu einer Längserstreckungsrichtung des Leitelements verläuft, und

e. von einem Sender des zweiten Sender-Empfänger-Paares Oberflächenwellen an der Mantelfläche des Leitelements angeregt werden, deren Hauptausbreitungsrichtung auf einen definierten Winkel $\alpha$ zur Längserstreckungsrichtung des Rohres eingestellt ist, mit $0° < \alpha < 90°$.

Derart breiten sich von dem Sender des zweiten Sender-Empfänger-Paares Oberflächenwellen helixartig an der Mantelfläche des Leitelements zu dem zweiten Empfänger aus.

Durch Ermitteln von Eigenschaften der Ausbreitung unterschiedlicher Wellenzüge zwischen Sender und Empfänger mittels der am Empfänger beim Empfang der Wellenzüge erzeugten Signale können physikalische, chemische und/oder biologische Eigenschaften, z.B. eine Strömungsgeschwindigkeit des Mediums, bestimmt werden. Hierbei ist in einer Ausgestaltung dann vorgesehen, den Winkel $\alpha$ derart einzustellen, dass die mittels der angeregten Oberflächenwellen in das Medium einkoppelnden akustischen Wellen, üblicherweise Volumenschallwellen, stets in einem Winkel $\sigma > 30°$ zur Längserstreckungsrichtung des Leitelements und zu einer Mittelachse des Leitelements verlaufen.

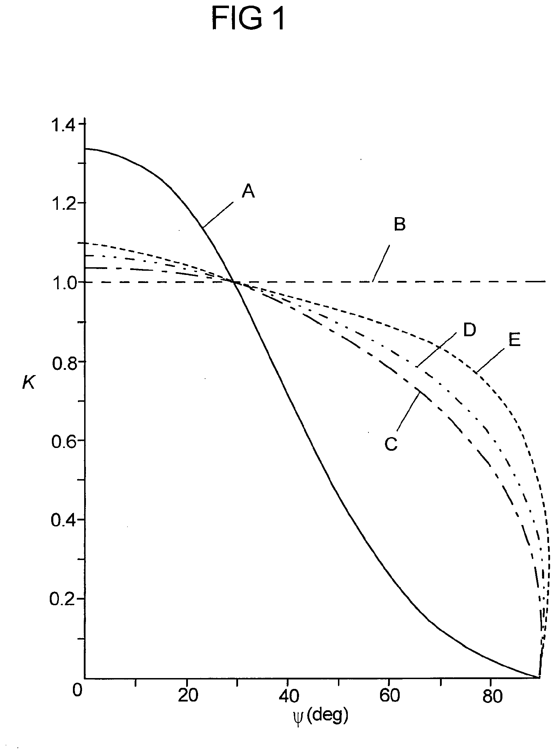

Hierüber wird in Anlehnung an die Arbeiten Jacksons ("A three-path ultrasonic flow meter with fluid velocity profile identification", in Meas. Sci. Technol. 2, S. 635-643, 1991) eine Strömungsprofilkorrektur möglich. Nach Jackson reichen drei definierte Pfade in einem Rohrquerschnitt aus, um ein symmetrisches Strömungsprofil hinreichend genau ermitteln und zur Strömungsprofilkorrektur einer Durchflussmessung nutzen zu können. Die beigefügte Figur 1 aus seiner Arbeit zeigt den erforderlichen Korrekturfaktor K für verschiedene Winkel $\psi$ (entsprechend dem vorstehend erläuterten Winkel $\sigma$) bei verschiedenen axialsymmetrischen Strömungsprofilen (ebd., S. 637). Eine Kurve A veranschaulicht dabei den Korrekturfaktor K über dem Winkel $\psi$ für ein parabolisches Strömungsprofil, eine Kurve B für ein flaches Strömungsprofil und Kurven C, D und E für Potenzfunktionen mit n=5, 6,5 bzw. 10. Demnach sind neben einer zentrischen Durchschallung, die zur Schallgeschwindigkeits-, Dichte-, Temperatur- und Konzentrationsmessung nach dem Stand der Technik genutzt wird, noch zwei weitere Winkel zu realisieren, davon mindestens einer deutlich größer als 30° zur Mittelachse. Dies wird in der angesprochenen Ausführungsvariante durch die erfindungsgemäß schräg im Medium laufenden Oberflächenwellen des zweiten Sender-Empfänger-Paares realisiert.

Bei dem Leitelement kann es sich somit beispielsweise um ein Rohr handeln, das einen mit dem Medium gefüllten Innenraum definiert. Es kann sich aber auch um ein Rohrsegment, ein (offenes) Gerinne oder um eine gebogene Platte handeln, das oder die lediglich als Teil einer Sensoreinrichtung zur Bestimmung von physikalischen, chemischen und/oder biologischen Eigenschaften des Mediums in einen mit dem Medium gefüllten Innenraum, z.B. innerhalb eines Rohres, eingetaucht wird.

Für eine Schallgeschwindigkeit der angeregten Oberflächenwellen im Bereich von 600 m/s bis 2000 m/s kann der Winkel $\alpha$ z. Beispiel zwischen 50° und 60° eingestellt sein, insbesondere auf einen Winkel $\alpha$ im Bereich von 51° bis 56°. Ist eine Schallgeschwindigkeit der angeregten Oberflächenwellen im Bereich von 600 m/s bis 1150 m/s vorgegeben, ist der der Winkel $\alpha$ in einer Ausführungsvariante zwischen 37° und 45° eingestellt, insbesondere auf einen Winkel $\alpha$ im Bereich von 38° bis 44°. Durch die Einstellung der vorstehend angegebenen Winkelbereiche mittels des Senders können Sender und Empfänger vergleichsweise kompakt ausgestaltet sein, da die sich ergebenden Schallpfade zwischen Sender und Empfänger vergleichsweise schmal sind und hiermit ein guter Kompromiss insbesondere zwischen hinreichend langer Verweildauer des Schallpakets im strömenden Medium (woraus ein großer Messeffekt resultiert) und einem Winkel $\sigma$ größer 30° erzielbar ist. Die vorstehend angegebenen Winkelbereiche werden dabei durch entsprechende Positionierung und Auslegung des Senders erreicht. Die passende Positionierung des Senders kann sich hierbei z.B. rechnerisch oder durch Versuche ergeben.

In einer Weiterbildung ist noch wenigstens ein weiteres, drittes Sender-Empfänger-Paar vorgesehen, bei dem von einem Sender des dritten Sender-Empfänger-Paare Oberflächenwellen angeregt werden, deren Ausbreitungsrichtung auf einen definierten Winkel γ zur Längserstreckungsrichtung des Leitelements eingestellt ist, mit 0° < γ < 90°. Hierüber ist beispielsweise in besonders einfacher Weise eine noch präzisere Durchflussmessung möglich.

Für eine Schallgeschwindigkeit der angeregten Oberflächenwellen im Bereich von 600 m/s bis 1150 m/s ist der Winkel für ein drittes Sender-Empfänger-Paar dann z.B. ebenfalls zwischen 37° und 45° eingestellt, insbesondere auf einen Winkel γ im Bereich von 38° bis 44°.

Für eine deutliche Verbesserung der Messgenauigkeit sind die Einstellungen des Senders und die Position des Empfängers eines dritten Sender-Empfänger-Paares - wie bei einem zweiten Sender-Empfänger-Paar - derart vorgenommen und aufeinander abgestimmt, dass von einem Empfänger eines dritten Sender-Empfänger-Paares dann Oberflächenwellen empfangen werden können, die sich ausgehend von dem Sender dieses Sender-Empfänger-Paares ausschließlich an einer äußeren Mantelfläche entlang helixartig ausgebreitet haben.

Das vorgeschlagene Verfahren kann, wie bereits vorstehend angesprochen, dazu genutzt werden, mittels der an den unterschiedlichen Empfängern der ersten und zweiten Sender-Empfänger-Paare empfangenen Oberflächenwellen eine vergleichsweise sehr exakte Durchflussmessung durchzuführen und eine Strömungsgeschwindigkeit des Mediums durch das Leitelement zu bestimmen. Insbesondere kann auf Basis der an den unterschiedlichen Empfängern der ersten und zweiten Sender-Empfänger-Paare empfangenen Oberflächenwellen ein Strömungsprofil ermittelt und eine Strömungsprofilkorrektur bei der Bestimmung der Strömungsgeschwindigkeit des Mediums vorgenommen werden.

Nach einem zweiten Erfindungsaspekt ist eine Vorrichtung zur Bestimmung von physikalischen, chemischen und/oder biologischen Eigenschaften eines Mediums vorgeschlagen, mit

- einem akustischen Wellenleiter mit einem längserstreckten und quer zu seiner Längserstreckungsrichtung gewölbten Leitelement, an das ein zu charakterisierendes Medium angrenzen kann,

- wenigstens zwei Sender-Empfänger-Paaren, wobei

  a. mittels eines Senders eines jeden Sender-Empfänger Paares Oberflächenwellen an einer Mantelfläche des Leitelements anregbar sind, und
  b. mittels eines Empfängers eines jeden Sender-Empfänger-Paares Oberflächenwellen empfangbar sind, die zumindest teilweise auf akustische Welle zurückgehen, welche durch sich an der Mantelfläche ausbreitende akustische Oberflächenwellen angeregt werden, sich im Medium ausbreiten und zumindest teilweise wieder als Oberflächenwellen in die Mantelfläche des Leitelements einkoppeln, und

- einer mit den unterschiedlichen Empfängern der ersten und zweiten Sender-Empfänger-Paare gekoppelten elektronischen Auswerteeinrichtung, mittels der an den unterschiedlichen Empfängern der ersten und zweiten Sender-Empfänger-Paare empfangenen Oberflächenwellen physikalische, chemische und/oder biologische Eigenschaften des Mediums bestimmbar sind.

Hierbei ist zusätzlich vorgesehen, dass

- ein Sender des ersten Sender-Empfänger-Paares eingerichtet und an einer äußeren Mantelfläche des Leitelements angeordnet, Oberflächenwellen anzuregen, deren Ausbreitungsrichtung parallel zu der Längserstreckungsrichtung des Leitelements verläuft, und

- ein Sender des zweiten Sender-Empfänger-Paares eingerichtet und derart an der äußeren Mantelfläche des Leitelements angeordnet ist, Oberflächenwellen anzuregen, deren Ausbreitungsrichtung auf einen definierten Winkel α zur Längserstreckungsrichtung des Leitelements eingestellt ist, mit 0° < α < 90°.

Für eine Schallgeschwindigkeit der angeregten Oberflächenwellen im Bereich von 600 m/s bis 2000 m/s kann der Sender des zweiten Sender-Empfänger-Paares erneut eingerichtet und derart an der äußeren Mantelfläche des Leitelements angeordnet sein, dass der Winkel α zwischen 50° und 60° eingestellt ist, insbesondere auf einen Winkel α im Bereich von 51° bis 56°. Für eine Schallgeschwindigkeit der angeregten Oberflächenwellen im Bereich von 600 m/s bis 1150 m/s kann der Winkel α durch den Sender auf zwischen 37° und 45° eingestellt sein, insbesondere auf einen Winkel α im Bereich von 38° bis 44°.

Wie bereits vorstehend unter Verweis auf ein vorgeschlagenes Verfahren erläutert, kann die Vorrichtung noch wenigstens ein weiteres, drittes Sender-Empfänger-Paar umfassen, bei dem ein Sender des dritten Sender-Empfänger-Paare eingerichtet und an der äußeren Mantelfläche des Leitelements angeordnet sind, Oberflächenwellen anzuregen, deren Ausbreitungsrichtung auf einen definierten Winkel γ zur Längserstreckungsrichtung des Leitelements eingestellt ist, mit 0° < γ < 90°.

Für eine Schallgeschwindigkeit der durch den Sender des dritten Sender-Empfänger-Paares anzuregenden Oberflächenwellen im Bereich von 600 m/s bis 1150 m/s kann der Sender des dritten Sender-Empfänger-Paare ebenfalls eingerichtet und derart an der äußeren Mantelfläche des Leitelements angeordnet sein, dass der Winkel γ zwischen 37° und 45° eingestellt ist, insbesondere auf einen Winkel $\gamma$ im Bereich von 38° bis 44°.

Ein Sender und/oder ein Empfänger können grundsätzlich durch einen Transducer gebildet sind, insbesondere einen Interdigitaltransducer oder einen Wedge-Transducer.

Mittels der vorgeschlagenen Vorrichtung ist dabei insbesondere das vorgeschlagene Verfahren durchführbar, sodass vorstehend und nachstehend erläuterte Vorteile und Merkmale von Ausführungsvarianten des Verfahrens auch für Ausführungsvarianten der Vorrichtung gelten und umgekehrt.

Die beigefügten Figuren veranschaulichen exemplarisch mögliche Ausführungsbeispiel der vorgeschlagenen Lösung.

Hierbei zeigen:

Figur 1 Diagramm zu Veranschaulichung eines Korrekturfaktors K für verschiedene Winkel $\psi$ bei verschiedenen axialsymmetrischen Strömungsprofilen;

Figuren 2A-2B eine Ausführungsvariante einer Messvorrichtung unter Veranschaulichung eines vergleichsweise breiten helixartigen Schallpfandbandes ausgehend von einem Sender eines Sender-Empfänger-Paares der Messvorrichtung;

Figuren 3A-3B eine Ausführungsvariante einer Messvorrichtung unter Darstellung der Positionen von Sender und Empfänger der Sender-Empfänger-Paare unter Veranschaulichung vergleichsweise schmalen helixartigen Schallpfandbandes ausgehend von einem (gemeinsamen) Sender;

Figur 4 eine aus dem Stand der Technik bekannte Messvorrichtung.

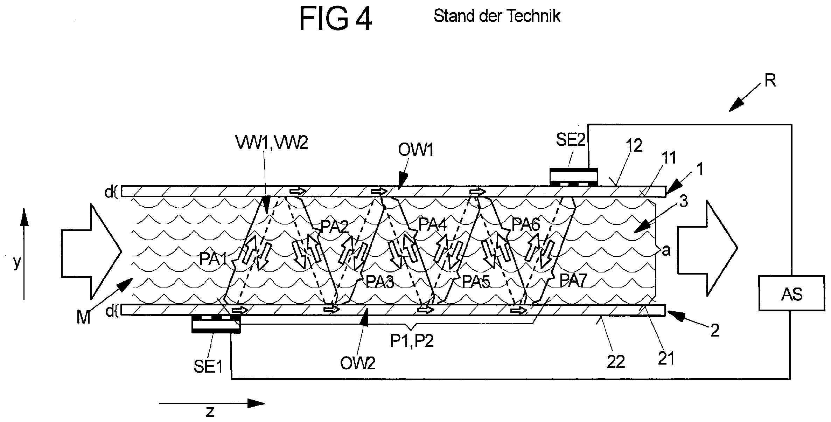

In der geschnittenen Ansicht der Figur 4 ist teilweise eine an sich bereits bekannte (Mess-)Vorrichtung gezeigt, die zur Bestimmung physikalischer, chemischer und/oder biologischer Eigenschaften eines Mediums M, insbesondere zur Bestimmung bzw. Messung einer Strömungsgeschwindigkeit des strömenden Mediums M ausgebildet und vorgesehen ist Ein akustischer Wellenleiter mit zwei Substraten 1, 2 als Leitelementen des Wellenleiters ist Teil der Messvorrichtung ist, wobei das Medium M durch den Wellenleiter strömt. Die Substrate 1, 2, die einander gegenüberliegen und deren aufeinander zuweisende (innere) Oberflächen 11, 21 parallel zueinander entlang einer Haupterstreckungsrichtung des Wellenleiters verlaufen, sind aus einem nicht piezoelektrischen Material hergestellt. Die Substrate sind hierbei sich gegenüberliegende Abschnitte eines durchgehenden zylindrischen, vorzugsweise kreiszylindrischen Rohrmantels eines Rohres R.

Diese Substrate 1, 2 liegen sich in einem Abstand a gegenüber und sind vorliegend durch zwei sich in diesem Abstand a gegenüberliegende Wandabschnitte des Rohres R berandet, die einen (kanalförmigen) Innenraum 3 des als Wellenleiter fungierenden Rohres bzw. eines Rohrstückes bilden. In dem Innenraum 3 ist das zu vermessende Medium M, das durch wellenförmige Linien schematisch dargestellt ist, eingefüllt, wobei das Medium M durch den Innenraum 3 hindurchströmen kann. Die Strömungsrichtung des flüssigen, beziehungsweise fließfähigen Mediums M durch den Innenraum 3 ist grundsätzlich beliebig. Vorliegend erfolgt eine Durchströmung von einer Einlassöffnung zu einer Auslassöffnung entlang der Erstreckungsrichtung z des Wellenleiters und parallel zu den inneren Oberflächen 11, 21. Die Strömungsrichtung ist in der Figur 4 durch Pfeile an der Auslass- beziehungsweise Einlassöffnung angezeigt.

Den beiden (ersten und zweiten) Substraten 1 und 2 des Wellenleiters der Vorrichtung sind eine erste Sender-Empfängereinheit SE1 und eine zweite Sender-Empfängereinheit SE2 zugeordnet, die zusammen ein (erstes) Sender-Empfänger-Paar bilden. Dabei ist jede Sender-Empfängereinheit SE1, SE2 in wenigstens zwei unterschiedlichen Betriebsmodi einerseits als Sender und andererseits als Empfänger betreibbar, um Oberflächenwellen anzuregen bzw. zu empfangen. Somit kann beispielsweise die erste Sender-Empfängereinheit SE1 des zweiten Substrats 2 (zunächst) als Sender betrieben, während die zweite Sender-Empfängereinheit SE2 des ersten Substrats 1 als Empfänger betrieben wird.

Die Sender-Empfängereinheiten SE1, SE2 sind jeweils an einer äußeren Oberfläche 22 bzw. 12 des jeweiligen Substrats 2 oder 1 bzw. außen an der Mantelfläche des Rohres R angeordnet, die einer jeweils dem Innenraum 5 mit dem Medium M zugewandten, inneren Oberfläche 21 bzw. 11 gegenüberliegt. Bei den beiden Sender-Empfängereinheiten SE1, SE2 handelt sich vorzugsweise um piezoelektrische Wandler mit interdigitalen Elektroden oder vollflächige piezoelektrische Wandler mit keilförmiger Vorlaufstrecke. Vorzugsweise erfolgt die Befestigung einer Sender-Empfängereinheit SE1, SE2 an dem jeweiligen Substrat 2, 1 durch Kleben, sodass diese einfach und zügig zu montieren ist. Alternativ können auch andere Befestigungsarten vorgesehen sein.

Die erste Sender-Empfängereinheit SE1 der Figur 4 befindet sich vorliegend im Bereich eines ersten Endes des Wellenleiters, während die zweite Sender-Empfängereinheit SE2 im Bereich eines anderen, zweiten Endes des Wellenleiters angeordnet ist und sich der Wellenleiter in der dargestellten Querschnittsansicht zwischen diesen beiden Enden entlang der Haupterstreckungsrichtung z erstreckt.

Über eine als Sender arbeitende Sender-Empfängereinheit, z. B. SE1, werden mittels eines vorgegebenen vorzugsweise pulsartigen Sendesignals akustische Oberflächenwellen OW2 in dem Substrat 2 erzeugt. Ein Teil der Energie dieser erzeugten akustischen Oberflächenwellen OW2 wird an der Grenzfläche der inneren Oberfläche 21 als Volumenschallwelle VW1 in das Medium M eingekoppelt. Die Ausbreitung einer Volumenschallwelle VW1 und die Ausbreitungsrichtung der Volumenschallwelle VW1 sind dabei in der Figur 4 schematisch durch eine gestrichelte Linie und durch einen Pfeil neben dieser gestrichelten Linie dargestellt. Durch jeweils zwei gegenläufige Pfeile neben den gestrichelten Linien wird zum Ausdruck gebracht, dass sich Volumenschallwellen entlang durch die gestrichelten Linien repräsentierten Pfadabschnitte PA1 bis PA7 in einem Betriebsmodus der Vorrichtung in die eine und in einem anderen Betriebsmodus der Vorrichtung in die andere Richtung ausbreiten.

Die beiden Substrate 1, 2, die die inneren Oberfläche 12, 21 bilden, bestehen vorzugsweise aus einem nicht piezoelektrischen Material und weisen eine Dicke d auf, die als der Abstand der inneren Oberflächen 11, 21 (=Nennweite des Rohres) der jeweiligen zugeordneten äußeren Oberfläche 12 bzw. 22 definiert ist. Vorliegend ist die Dicke d kleiner oder gleich der Wellenlänge der jeweils erzeugten akustischen Oberflächenwellen. Hierdurch können akustische Oberflächenwellen, die sich innerhalb der Substrate 1, 2 ausbreiten, Welleneigenschaften derart aufweisen, dass sie sich sowohl entlang der inneren Oberflächen 11, 21 als auch entlang der äußeren Oberflächen 12, 22 der plattenförmigen Substrate 1, 2 ausbreiten. Es werden somit Lamb-Wellen oder Wellen im Übergangsbereich von Lamb-Wellen und Rayleigh-Wellen angeregt. In Abhängigkeit der Dicke d der Platten der Substrate 1, 2 werden dabei akustische Oberflächenwelle im Wesentlichen in Form von Lamb-Wellen (d kleiner als die Wellenlänge der akustischen Oberflächenwellen) oder in Form von Wellen aus dem Übergangsbereich zwischen Lamb-Wellen und Rayleigh-Wellen (d gleich der Wellenlänge der akustischen Oberflächenwellen) vorliegen. In jedem Fall breiten sich die akustischen Oberflächenwellen vorliegend entlang beider Oberflächen 11, 12 bzw. 21, 22 der Substrate 1 und 2 aus.

Wie in der Figur 4 veranschaulicht ist, verlaufen z.B. die akustischen Oberflächenwellen OW2 damit ausgehend von der als Sender arbeitenden Sender-Empfängereinheit SE1 entlang der Erstreckungsrichtung z des zweiten Substrats 2 und insbesondere entlang der inneren Oberfläche 21 dieses Substrats 2. Ein Teil der Schallwellenenergie der entlang der inneren Oberfläche 21 des Substrats 2 laufenden akustischen Oberflächenwellen OW2 wird in das innerhalb des Innenraums 3 befindliche Medium M eingekoppelt, sodass die Volumenschallwellen VW1 innerhalb des Mediums M erzeugt werden. Dabei ist eine Ausbreitungsrichtung dieser eingekoppelten Volumenschallwellen VW1 um einen charakteristischen Winkel Δ, der nicht eingezeichnet ist, relativ zu der Normalen auf der flachen Oberfläche 21 geneigt.

Die Volumenschallwellen VW1 breiten sich jeweils entlang eines Pfades P1 im Medium M aus. Dieser Pfad lässt sich in verschiedene durch gestrichelte Linien dargestellte Abschnitte PA1, PA2, PA3, PA4, PA5, PA6, PA7 unterteilen. Jeder dieser Pfadabschnitte verläuft zwischen dem einen (zweiten) Substrat 2 und dem anderen (ersten) Substrat 1. Sobald die Volumenschallwelle VW1 an einer Interaktionsstelle an der inneren Oberfläche 11 des gegenüberliegenden Substrats 1 angelangt ist, wird ein Teil ihrer Energie in das Substrat 1 eingekoppelt, sodass hierin akustische Oberflächenwellen OW1, beispielsweise in Form von Lamb-Wellen oder Oberflächenwellen im Übergangsbereich von Lamb-Wellen und Rayleigh-Wellen, erzeugt werden, die sich entlang dieses Substrats 1 ausbreiten.

Ferner tritt zu jedem Zeitpunkt, an dem die Volumenschallwelle VW1 an der inneren Oberfläche 11 oder 21 eines der Substrate 1, 2 angelangt, eine Wechselwirkung dieser Schallwelle mit dem entsprechenden Substrat 1, 2 auf. Hierbei tritt in der Regel ein Energieaustausch von akustischer Energie zwischen dem Substrat 1, 2, insbesondere der Oberflächenwelle OW1, OW2 des jeweiligen Substrates 1, 2 und der Volumenschallwelle VW1 auf. Die Volumenschallwelle VW1 wird zumindest zum Teil reflektiert und ändert dabei ihre Ausbreitungsrichtung. Besteht die Wechselwirkung in einer Einkopplung von Energie aus der Volumenschallwelle VW1 in die betreffende Oberflächenwelle OW1, so wird die Amplitude der Oberflächenwelle OW1 durch diese Einkopplung erhöht und die Amplitude der Volumenschallwelle VW1 nimmt ab. Es kann alternativ auch in Abhängigkeit von den Eigenschaften des Substrats und des Mediums M, sowie der Welle eine Einkopplung von Energie der Oberflächenwelle OW1 in die Volumenschallwelle VW 1 erfolgen.

Durch die Wechselwirkung der Volumenschallwelle VW1 mit den Substraten 1, 2 entlang ihres Pfades P1 sind somit mehrere Interaktionsstellen definiert. An diesen Interaktionsstellen wechselwirkt die Volumenschallwelle VW1 jeweils mit einem Substrat 1, 2 und den in dem Substrat 1, 2 auftretenden Oberflächenwellen OW1, OW2. Insgesamt breiten sich somit Volumenschallwellen VW1 umfassende (erste) Wellenzüge auf einen im Wesentlichen zickzackförmigen Ausbreitungspfad P1 im Medium zwischen der ersten Sender-Empfängereinheit SE1 und der zweiten Sender-Empfängereinheit SE2 entlang der Haupterstreckungsrichtung des Wellenleiters aus. Aufgrund der Wechselwirkung der Volumenschallwelle VW1 mit dem zweiten Substrat 2 gegenüberliegenden ersten Substrat 1 an dessen inneren Oberfläche 11 kommt es zur Anregung der Oberflächenwellen OW1, die sich auf dem Substrat 1 ausbreiten und schließlich an der als Empfänger arbeitenden Sender-Empfängereinheit SE2 empfangen werden können. Zwischen den Interaktionsstellen des zweiten Substrats 2, also denjenigen Stellen, an denen die Volumenschallwellen VW1 mit dem zweiten Substrat 2 wechselwirken, breiten sich die Oberflächenwellen OW1 ohne Verstärkung aus, erfahren aber an der darauffolgenden Interaktionsstelle (unter Umständen) eine weitere Verstärkung. Durch die Messung der am Empfänger E eintreffenden Wellenzüge, insbesondere der Oberflächenwellen OW1, die durch Wechselwirkung mit der Volumenschallwelle VW1 angeregt wurde, kann die Laufzeit von Wellenzügen zwischen der ersten und zweiten Sender-Empfängereinheit SE1, SE2 ermittelt werden.

So kann aus akustischen Oberflächenwellen OW1 (beziehungsweise Gruppen von Oberflächenwellen OW1), die nacheinander an der als Empfänger arbeitenden Sender-Empfängereinheit SE2 eintreffen, auf die Schallgeschwindigkeit innerhalb des Mediums M rückgeschlossen werden, insbesondere wenn die Laufzeit der Wellenzüge zwischen den Sender-Empfängereinheiten SE1, SE2 bestimmt wird. Mit einer weiteren Sender-Empfängereinheit auf dem Substrat 2, in einiger Entfernung von SE1 angeordnet, kann eine zusätzliche Amplitudeninformation gewonnen werden. Das Verhältnis der an SE2 und der weiteren Sender-Empfängereinheit gemessenen Amplituden kann genutzt werden um auf die Stoffdichte des Mediums rückzuschließen. Da die gemessenen Laufzeiten und Amplituden der über die Volumenschallwelle VW1 an den jeweiligen Interaktionsstellen eingekoppelten akustischen Oberflächenwellen OW1 von den Eigenschaften des Mediums M beeinflusst werden, können derart durch eine elektronische Auswerteinrichtung AS, an die die Signale einer Sender-Empfängereinheit SE2 weitergeleitet werden, physikalische, chemische und/oder biologische Eigenschaften des zu vermessenden Mediums M bestimmt werden. Hierbei wird jeweils aus einer an der Sender-Empfängereinheit SE2 oder SE1 empfangenen akustischen Welle, die sich als Volumenschallwelle VW1 (oder VW2) zumindest teilweise durch das Medium M von der anderen Sender-Empfängereinheit SE1, SE2 zu dieser Sender-Empfängereinheit SE2, SE1 ausgebreitet hat, ein Empfangssignale erzeugt.

Hierbei ist zu beachten, dass an einem Empfänger bzw. einer im Empfänger-Modus betriebenen Sender-Empfängereinheit SE2 üblicherweise ausschließlich Oberflächenwellen OW1 empfangen werden, wobei diese Oberflächenwellen OW1 auf die auf das erste Substrat 1 auftreffende Volumenschallwelle VW1 zurückgehen. Die ermittelten zeitlichen Differenzen zwischen dem Empfang einer oder mehrerer Oberflächenwelle(n) wird dementsprechend auch als Basis für die Bestimmung der Strömungsgeschwindigkeit genutzt, wie dies nachfolgend noch näher erläutert werden wird.

Die Vorrichtung der Figur 4 kann hierfür über einen Multiplex in zwei unterschiedlichen Betriebsmodi betrieben werden, d. h., dass auch die vormals in einem Empfängermodus betriebene zweite Sender-Empfängereinheit SE2 in einem Sendermodus betrieben wird und die vormals im Sendermodus betriebene erste Sender-Empfängereinheit SE1 im Empfängermodus betrieben wird. Dabei wird nun durch die im Sendermodus betriebene zweite Sender-Empfängereinheit SE2 eine akustische Oberflächenwelle OW1 im ersten Substrat 1 angeregt. Zumindest ein Teil der Energie dieser akustischen Oberflächenwelle OW1 wird wie zuvor in Energie einer sich im Medium M ausbreitenden akustischen Volumenschallwelle VW2 umgewandelt, die sich nun auf einem Ausbreitungspfad P2 von der zweiten Sender-Empfängereinheit SE2 zur ersten Sender-Empfängereinheit SE1 durch das Medium M ausbreitet. Die von der zweiten Sender-Empfängereinheit SE2 angeregte Oberflächenwelle OW1 einer zweiten akustischen Welle geht somit von der dieser Sender-Empfängereinheit SE2 aus, sodass die dadurch angeregte Volumenschallwelle VW2 im Wesentlichen entgegengesetzt zu der vorangegangenen Volumenschallwelle VW1 und zickzackförmig durch das Medium M in Richtung der ersten Sender-Empfängereinheit SE1 verläuft.

Über die Umschaltung zwischen Sender- und Empfängermodus der Sender-Empfängereinheiten SE1, SE2 wird folglich die Laufrichtung der Volumenschallwellen VW1, VW2 innerhalb des Mediums M entlang der Hauptausbreitungsrichtung des Wellenleiters umgekehrt. Es ergibt sich damit, dass sich je nach Betriebsmodus (erste oder zweite) Wellenzüge bzw. erste oder zweite akustische Wellen zwischen den beiden Sender-Empfängereinheiten SE1 und SE2 einerseits so ausbreiten, dass sie im Medium verlaufende Pfadabschnitte PA1 bis PA7 aufweisen, entlang derer sie einen Ausbreitungsgeschwindigkeitsvektor haben mit einer vektoriellen Ausbreitungsgeschwindigkeitskomponente in Richtung der Strömung des Mediums M (erste Wellenzüge), und andererseits so ausbreiten, dass sie im Medium verlaufende Pfadabschnitte PA7 bis PA1 aufweisen, entlang derer sie einen Ausbreitungsgeschwindigkeitsvektor haben mit einer vektoriellen Ausbreitungsgeschwindigkeitskomponente in Gegenrichtung zur Strömung des Mediums M (zweite Wellenzüge). Folglich weichen die Laufzeiten für an der ersten Sender-Empfängereinheit SE1 empfangene Oberflächenwellen eines zweiten Wellenzuges von den Laufzeiten für von an der zweiten Sender-Empfängereinheit SE2 empfangene Oberflächenwellen eines ersten Wellenzuges aufgrund der Strömung des Mediums M voneinander ab. Durch eine Messung der (absoluten) Laufzeiten der beiden Wellenzüge und/oder die Ermittlung einer Differenz der Laufzeiten der zueinander entgegengesetzten Wellenzüge ist es damit grundsätzlich möglich, die Strömungsgeschwindigkeit des Mediums M zu bestimmen. Ferner lassen sich über die Ausbreitung der Wellenzüge entlang des Wellenleiters Informationen über die Schallgeschwindigkeit, die Dichte bzw. die Konzentration von Substanzen in dem Medium M ableiten.

Anhand empfangener Signale für eintreffende akustische Wellen (Empfangssignale) auf eine Laufzeitdifferenz oder sogar die absolute Laufzeit einer akustischen Welle zwischen den Sender-Empfängereinheiten SE1, SE2 zu schließen, ist jedoch keinesfalls trivial und erfordert gegebenenfalls einen enormen rechnerischen Aufwand. Dies gilt im Übrigen auch für andere Messvorrichtungen, bei denen mithilfe akustischer Wellen physikalische, chemische und/oder biologische Eigenschaften eines Mediums bestimmt werden.

Hier setzt nun ein erfindungsgemäßes Verfahren an, das ein weiteres Sender-Empfänger-Paar vorsieht, bei dem von einem Sender des zweiten Sender-Empfänger-Paares Oberflächenwellen angeregt werden, deren (Haupt-) Ausbreitungsrichtung auf einen definierten Winkel $\alpha$ zur Längserstreckungsrichtung des Rohres eingestellt ist, mit $0° < \alpha < 90°$. Derart breiten sich die schräg zu einer Mittelachse des Rohres unter dem Winkel $\alpha$ angeregten Oberflächenwellen helixartig an der Mantelfläche des Rohres zu dem zweiten Empfänger aus.

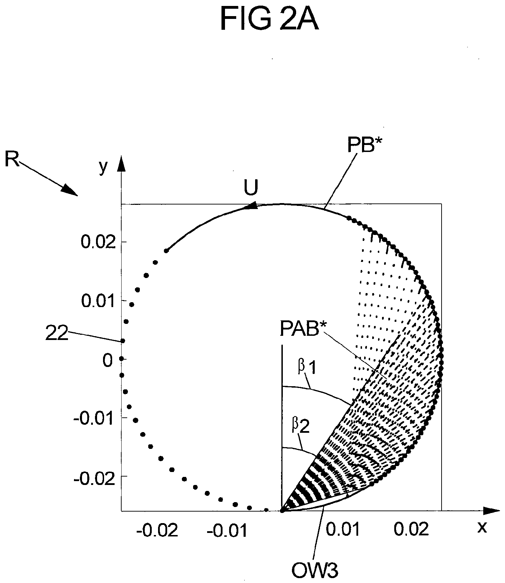

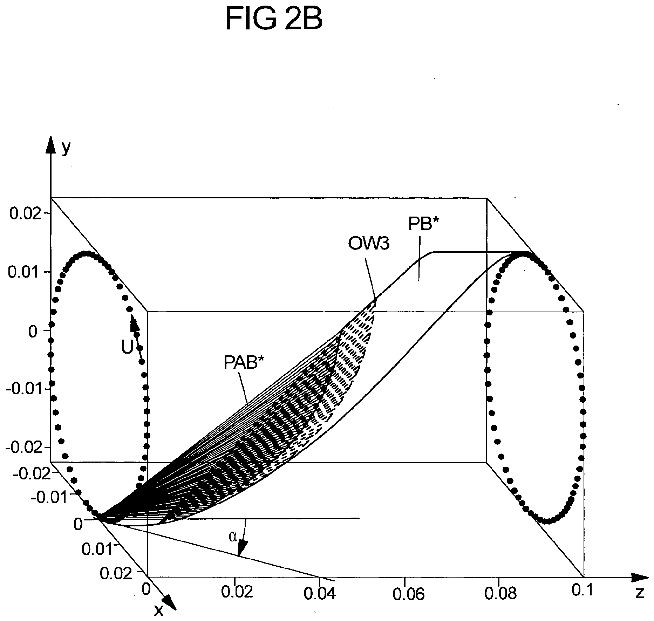

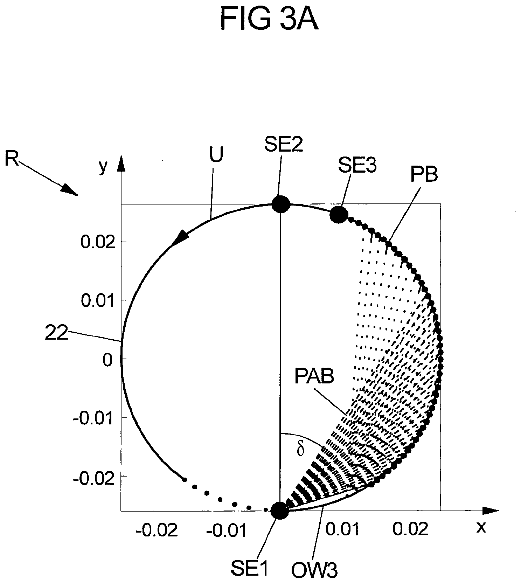

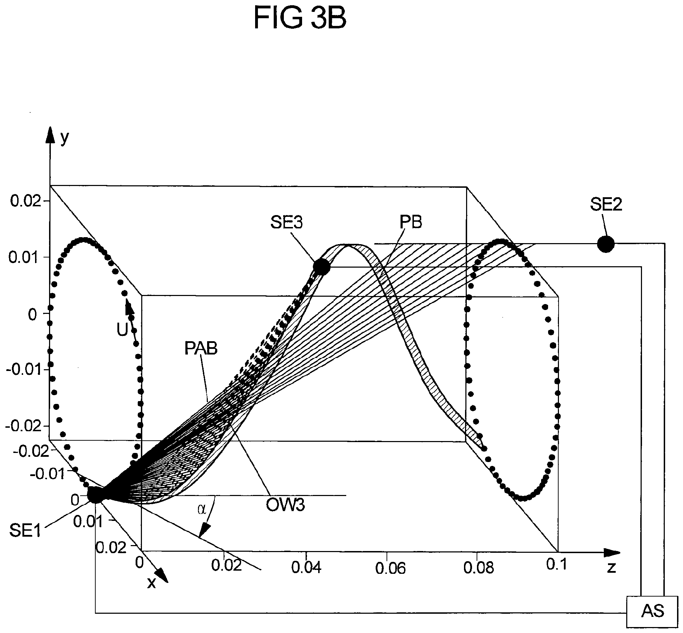

Ein in eine Vorzugsrichtung bzw. Hauptausbreitungsrichtung (Winkel $\alpha$, ausgehend von der auf die Rohrwand projizierte Rohrachse) auf der Mantelfläche 22 des Rohrs R angeregtes Schallpaket läuft helixförmig auf dieser Mantelfläche 22 mit der Phasengeschwindigkeit $c_{Ph}$ einer Plattenwelle auf der Rohrwand (in den Figuren 2A, 2B, 3A und 3B schwarz / punktiert dargestellt). Ausgehend vom Startpunkt (x(t=0)=0, y(t=0)=-R, z(t=0)=0) wird folgender Verlauf (x(t),y(t),z(t)) möglicher primärer Schallpfade in der Rohrwand erhalten, wobei r den Radius des Rohrs beschreibt:

$$x(t) = r*\sin(c_u*t/R)$$

$$y(t) = -r*\cos(c_u*t/R)$$

$$z(t) = c_z*t$$

$c_u$ und $c_z$ sind die in Umlaufrichtung bzw. Rohrachse projizierten Phasenschallgeschwindigkeiten der Plattenwelle, mit $c_u = c_{Ph}*\sin(\alpha)$ und $c_z = c_{Ph}*\cos(\alpha)$, d.h. $\tan(\alpha) = cu/cz$.

Die Plattenwellen koppeln, wie bereits unter Verweis auf Figur 4 dargestellt, bei ihrer Ausbreitung zumindest anteilig Schall ins eingeschlossene Medium M bzw. Fluid aus, wo eine geradlinige Ausbreitung des Schalls stattfindet (ausgehend vom Nullpunkt "0" in den Figuren 2A und 3A jeweils im rechten Bildteil und in den Figuren 2B und 3B jeweils im linken Bildteil dargestellt), bevor die Schallwelle erneut ins Rohr R einkoppelt. Die wieder einkoppelnden Schallanteile setzen ihre Ausbreitung zumindest anteilig in der Mantelfläche 22 als Helix mit derselben Steigung fort (Reziprozität) und bilden einen Sekundärschallpfad. Die Anordnung zum Schallempfang soll nun so beschaffen sein, dass sie gleichsam den direkt abgestrahlten Schall (also die zuerst formulierte Helix, Primärwelle) wie auch die Sekundär-Helix bei einem vorgegebenen Bereich der Schallgeschwindigkeit des Fluids überdeckt. Dabei ist der Winkel $\alpha$ derart voreingestellt, dass ein Schallpfad in dem Medium im ganzen Wertebereich der vorliegend möglichen Schallgeschwindigkeit stets einen Winkel größer 30° zur Mittelachse des Rohrs R annimmt (in der Figur 2A mit den Winkeln $\beta1$ und $\beta2$ gekennzeichnet) und eine hinreichend lange Strecke in Längsrichtung z des Rohres R überbrückt (=> Messeffekt).

Anhand der Figuren 2A und 2B ist eine Vorrichtung veranschaulicht, bei der der Winkel $\alpha$ auf 40° eingestellt ist. Zwar sind die in einem zugelassenen Schallgeschwindigkeitsbereich von 2000 m/s bis 600 m/s möglichen Schallpfade innerhalb des Mediums M, die über ein Bündel von Schallpfadabschnitten PAB* veranschaulicht sind, hinreichend gekippt (zwischen Winkel $\beta1$ und $\beta2$ bei Schallgeschwindigkeiten von 2000 bzw. 600 m/s) und auch lang genug im Fluid (>20 mm bei zum Beispiel DN50). Primär- und Sekundär-Helix sich zwischen einem Sender und einem Empfänger eines zweiten Sender-Empfänger-Paares an der Mantelfläche 22 des Rohres R ausbreitender Oberflächenwellen OW3 bilden aber noch einen vergleichsweise breiten Pfad auf der Rohrwand 22 (als Teil eines Pfadbündels PB* dargestellt). Derart ist eine gleichmäßige Detektion beider Anteile mit nur einem Transducer erschwert.

Als möglicher Kompromiss zwischen hinreichend langer Verweildauer des Schallpakets im strömenden Medium M (daraus resultierend großer Messeffekt) und einem Winkel $\sigma$ größer 30° zur Mittelachse des Rohres R sowie eng berandetem Schallpfad in der Rohrwand 22, sodass minimal kleine Transducer zum Senden und Empfangen der Schallpakete auf der Rohrwand 22 (entspricht 11 in Fig. 4) platziert werden können, kann auf Basis der erfindungsgemäßen Lösung beispielsweise eine Platzierung von Sender-Empfänger-Paaren SE1, SE2 und SE1, SE3 an einem Rohr R vorgesehen sein, bei der für großen Bereich der Schallgeschwindigkeit (600 m/s - 2000 m/s) mit wenigstens einem Sender/Empfänger oder nur genau einem zusätzlichen Sender-Empfänger-Paar und einem Winkel $\alpha$ im Bereich von 51° bis 56° gearbeitet wird. Hierüber kann eine strömungsprofilkorrigierte Durchflussmessung durchführt werden. Zur effektiven Strömungsprofilkompensation decken die Pfadabschnitte der in das Medium M eingekoppelten und sich durch das Medium M ausbreitenden Volumenschallwellen, die für die unterschiedlichen Schallgeschwindigkeiten in den Figuren 3A und 3B als Bündel PAB dargestellt sind, damit einen Winkelbereich für den Winkel $\sigma$ von ca. 30° bis 61° ab.

Eine beispielhafte Ausgestaltung der Messvorrichtung (hier DN50 aber beliebig in der Größe skalierbar) veranschaulichen die Figuren 3A und 3B ferner unter Darstellung der Positionen eines zweiten Sender-Empfänger-Paares SE1, SE3. Ein erstes Sender-Empfänger-Paar SE1, SE2 entsprechend der Figur 4 ist gleichermaßen an der Mantelfläche des Rohres R angeordnet. Die Position der beispielsweise als Transducer ausgeführten Sender-Empfänger-Einheiten SE1 und SE3 ist in den Figuren 3A und 3B markiert. Sie werden mit ihrer Hauptabstrahlrichtung in Richtung der eingezeichneten Helix eines Pfadbündels PB ausgerichtet (das entspricht dem oben genannten Wertebereich für den Winkel $\alpha$).

Grundsätzlich kann ein Sender mehreren, insbesondere beiden ersten und zweiten Sender-Empfänger-Paare zugeordnet sein oder jedes Sender-Empfänger-Paar kann einen eigenen Sender aufweisen, der zu einem Sender eines anderen Sender-Empfänger-Paares unterschiedlich und auch räumlich beabstandet positioniert ist. Eine als Sender und/oder Empfänger betriebene Sender-Empfänger-Einheit ist üblicherweise als Schallwandler ausgeführt, z.B. in Form eines Interdigitaltransducers oder eines Wedge-Transducers.

In einer Variante ist ein Sender SE1 des zweiten Sender-Empfänger-Paares SE1, SE3 eingerichtet und derart an der äußeren Mantelfläche 22 des Rohres R angeordnet, Oberflächenwellen OW3 anzuregen, deren Ausbreitungsrichtung für einen Schallgeschwindigkeitsbereich von ca. 600 m/s bis 1150 m/s auf einen definierten Winkel α zur Längserstreckungsrichtung z des Rohres R im Bereich von 38° bis 44° eingestellt ist.

Alternativ oder ergänzend ist in einer Variante mindestens noch ein zusätzliches, drittes Sender-Empfänger-Paar vorgesehen. Bei diesem ist dann bevorzugt, zur Messeffekterhöhung für einen Schallgeschwindigkeitsbereich von ca. 600 m/s bis 1150 m/s die Hauptabstrahlrichtung des Senders derart eingestellt, dass Oberflächenwellen OW3 an der Mantelfläche 22 des Rohres R angeregt werden, deren Hauptausbreitungsrichtung auf einen definierten Winkel γ zur Längserstreckungsrichtung z des Rohres R im Bereich von 38° bis 44° eingestellt ist. Hierüber ist beispielsweise in besonders einfacher Weise eine noch präzisere Durchflussmessung möglich.

Eine erfindungsgemäß ausgestaltete Messvorrichtung, insbesondere auf Basis einer Ausführungsvariante der Figuren 2A, 2B oder 3A, 3B kann auch zur Erkennung asymmetrischer Strömungsprofile und deren automatischen Korrektur bei der Bestimmung der Strömungsgeschwindigkeit des Mediums M durch das Rohr R genutzt werden. Hierbei können dann auch zusätzlich zu den ersten und zweiten und gegebenenfalls auch zusätzlich einem dritten Sender-Empfänger-Paar weitere Sender-Empfänger-Paare vorgesehen werden, insbesondere Sender-Empfänger-Paare, bei denen von einem Sender Oberflächenwellen OW3 an der Mantelfläche 22 des Rohres R angeregt werden, deren Hauptausbreitungsrichtung auf einen definierten Winkel >0° zur Längserstreckungsrichtung z des Rohres R eingestellt ist.

Es ist darüber hinaus offensichtlich, dass mit den dargestellten Vorrichtungen und den hiermit umgesetzten Verfahren nicht nur eine (mittlere) Strömungsgeschwindigkeit eines strömenden Mediums M bestimmbar und mithin eine Durchflussmessung durchführbar ist, sondern auch - alternativ oder ergänzend - eine Konzentrations-, Dicken-, Abstands-, Temperatur- und/oder Füllstandsmessung durchgeführt werden kann, wie dies bei vergleichbaren Vorrichtungen, die mit akustischen Wellen, insbesondere Ultraschallwellen, arbeiten, bereits weithin bekannt ist. Gleiches gilt für die Bestimmung zeitabhängiger Verläufe einer Momentanamplitude oder Momentanphase der empfangenen akustischen Wellen und daraus abgeleiteter Werte für Dichte und Viskosität des Mediums M.

**Bezugszeichenliste**

| | |
|---|---|
| 1 | (erstes) Substrat |
| 11 | innere Oberfläche / innere Mantelfläche |
| 12 | äußere Oberfläche |
| 2 | (zweites) Substrat |
| 21 | innere Oberfläche |
| 22 | äußere Oberfläche / äußere Mantelfläche |
| 3 | Innenraum |
| AS | Elektronische Auswerteeinrichtung |
| a | Abstand |
| d | Dicke |
| M | Medium |
| OW1, OW2, OW3 | Oberflächenwelle |
| P1, P2 | Pfad |
| PA1 - PA7 | Pfadabschnitt |
| PB, PB* | Pfadbündel |
| PAB, PAB* | Bündel an möglichen Pfadabschnitten |
| SE1, SE2, SE3 | Sender-Empfängereinheit / Transducer |
| R | Rohr |
| VW1, VW2 | Volumenschallwelle |
| α, β1, β2, σ | Winkel |
| u | Umfangsrichtung |

**Patentansprüche**

1. Verfahren zur Bestimmung von physikalischen, chemischen und/oder biologischen Eigenschaften eines Mediums (M) mithilfe wenigstens zweier Sender-Empfänger-Paare (SE1, SE2; SE1, SE3) und auf Basis wenigstens einer ersten und einer zweiten akustischen Welle, wobei sich die erste akustische Welle zumindest teilweise zwischen einem ersten Sender-Empfänger-Paar (SE1, SE2) durch das Medium (M) ausgebreitet hat und sich die zweite akustische Welle zumindest teilweise zwischen einem zweiten Sender-Empfänger-Paar (SE1, SE3) durch das Medium (M) ausgebreitet hat, wobei das Medium (M) an eine innere Mantelfläche eines längserstreckten und quer zu seiner Längserstreckungsrichtung (z) gewölbten Leitelementes (R) angrenzt und wobei

    a. mittels eines Senders (SE1) eines jeden Sender-Empfänger Paares (SE1, SE2; SE1, SE3) Oberflächenwellen (OW1, OW2, OW3) an einer Mantelfläche (11, 12, 21, 22) des Leitelements (R) angeregt werden,

b. mittels eines Empfängers (SE2, SE3) eines jeden Sender-Empfänger-Paares (SE1, SE2; SE1, SE3) Oberflächenwellen (OW1, OW2, OW3) empfangen werden, die zumindest teilweise auf eine erste oder zweite akustische Welle (VW1, VW2, ...) zurückgehen, welche durch sich an der Mantelfläche (11, 12, 21, 22) ausbreitende akustische Oberflächenwellen (OW1, OW2, OW3) angeregt wurde, sich im Medium (M) ausgebreitet hat und zumindest teilweise wieder als Oberflächenwelle (OW1, OW2, OW3) in die Mantelfläche (11, 12, 21, 22) des Leitelements (R) einkoppelt hat, und

c. mittels der an den unterschiedlichen Empfängern (SE2, SE3) der ersten und zweiten Sender-Empfänger-Paare (SE1, SE2; SE1, SE3) empfangenen Oberflächenwellen (OW1, OW2, OW3) und unter Messung von Laufzeiten unterschiedlicher, die Empfänger erreichender Wellenzüge (SE2, SE3) und/oder unter Ermittlung einer Differenz von Laufzeiten unterschiedlicher, die Empfänger erreichender Wellenzüge (SE2, SE3) physikalische, chemische und/oder biologische Eigenschaften des Mediums (M) bestimmt werden,

wobei

- von einem Sender (SE1) des ersten Sender-Empfänger-Paares (SE1, SE2) Oberflächenwellen (OW1, OW2) an der Mantelfläche (22) des Leitelements (R) angeregt werden, deren Hauptausbreitungsrichtung parallel zu der Längserstreckungsrichtung (z) des Leitelements (R) verläuft, **dadurch gekennzeichnet, dass**

- von einem Sender (SE1) des zweiten Sender-Empfänger-Paares (SE1, SE3) Oberflächenwellen (OW3) an der Mantelfläche (22) des Leitelements (R) angeregt werden, deren Hauptausbreitungsrichtung auf einen definierten Winkel $\alpha$ zur Längserstreckungsrichtung (z) des Leitelements (R) eingestellt ist, mit $0° < \alpha < 90°$, wobei von einem Empfänger (SE3) des zweiten Sender-Empfänger-Paares (SE1, SE3)

(a) Oberflächenwellen (OW3) empfangen werden, die sich entlang eines Primärschallpfades ausgehend von dem Sender (SE1) dieses zweiten Sender-Empfänger-Paares (SE1, SE3) ausschließlich an einer äußeren Mantelfläche (22) entlang helixartig ausgebreitet haben, und

(b) Oberflächenwellen (OW3) empfangen werden, die auf in das Medium (M) einkoppelnde Schallanteile der Oberflächenwellen (OW3) des Primärschallpfades zurückgehen, die wieder in die Mantelfläche (22) des Leitelements (R) eingekoppelt haben und sich entlang eines Sekundärschallpfades ebenfalls helixartig ausgebreitet haben, wobei die Steigung der Helix des Primärschallpfades und die Steigung der Helix des Sekundärschallpfades gleich sind.

2. Verfahren nach Anspruch 1, **dadurch gekennzeichnet, dass** für eine Schallgeschwindigkeit der angeregten Oberflächenwellen (OW1, OW2, OW3) im Bereich von 600 m/s bis 2000 m/s der Winkel $\alpha$ zwischen 50° und 60° eingestellt ist, insbesondere auf einen Winkel $\alpha$ im Bereich von 51° bis 56°.

3. Verfahren nach Anspruch 1, **dadurch gekennzeichnet, dass** für eine Schallgeschwindigkeit der angeregten Oberflächenwellen (OW1, OW2, OW3) im Bereich von 600 m/s bis 1150 m/s der Winkel $\alpha$ zwischen 37° und 45° eingestellt ist, insbesondere auf einen Winkel $\alpha$ im Bereich von 38° bis 44°.

4. Verfahren nach einem der vorhergehenden Ansprüche, **dadurch gekennzeichnet, dass** noch wenigstens ein weiteres, drittes Sender-Empfänger-Paar vorgesehen ist, bei dem von einem Sender des dritten Sender-Empfänger-Paares Oberflächenwellen angeregt werden, deren Ausbreitungsrichtung auf einen definierten Winkel $\gamma$ zur Längserstreckungsrichtung (z) des Leitelements (R) eingestellt ist, mit $0° < \gamma < 90°$.

5. Verfahren nach Anspruch 4, **dadurch gekennzeichnet, dass** für eine Schallgeschwindigkeit der angeregten Oberflächenwellen (OW1, OW2, OW3) im Bereich von 600 m/s bis 1150 m/s der Winkel $\gamma$ zwischen 37° und 45° eingestellt ist, insbesondere auf einen Winkel $\gamma$ im Bereich von 38° bis 44°.

6. Verfahren nach Anspruch 4 oder 5, **dadurch gekennzeichnet, dass** von einem Empfänger (SE3) des dritten Sender-Empfänger-Paares (SE1, SE3) Oberflächenwellen (OW3) empfangen werden, die sich ebenfalls ausgehend von dem Sender (SE1) des dritten Sender-Empfänger-Paares (SE1, SE3) ausschließlich an einer äußeren Mantelfläche (22) entlang helixartig ausgebreitet haben.

7. Verfahren nach einem der vorhergehenden Ansprüche, **dadurch gekennzeichnet, dass** mittels der an den unterschiedlichen Empfängern (SE2, SE3) der ersten und zweiten Sender-Empfänger-Paare (SE1, SE2; SE1, SE3) empfangenen Oberflächenwellen (OW1, OW2, OW3) eine Durchflussmessung durchgeführt und eine Strömungsgeschwindigkeit des Mediums (M) durch das Leitelement (R) bestimmt wird.

8. Verfahren nach Anspruch 7, **dadurch gekennzeichnet, dass** auf Basis der an den unterschiedlichen Empfängern (SE2, SE3) der ersten und zweiten Sender-Empfänger-Paare (SE1, SE2; SE1, SE3) empfangenen Oberflächenwellen (OW1, OW2, OW3) ein Strömungsprofil ermittelt und eine Strömungsprofilkorrektur bei der Bestimmung der Strömungsgeschwindigkeit des Mediums (M) vorgenommen wird.

9. Vorrichtung zur Bestimmung von physikalischen, chemischen und/oder biologischen Eigenschaften eines Mediums, insbesondere zur Durchführung eines Verfahrens nach einem der Ansprüche 1 bis 8, mit

- einem akustischen Wellenleiter mit einem längserstreckten und quer zu seiner Längserstreckungsrichtung (z) gewölbten Leitelement (R), an das ein zu charakterisierendes Medium (M) angrenzen kann,
- wenigstens zwei Sender-Empfänger-Paaren (SE1, SE2; SE1, SE3), wobei

a. mittels eines Senders (SE1) eines jeden Sender-Empfänger Paares (SE1, SE2; SE1, SE3) Oberflächenwellen (OW1, OW2, OW3) an einer Mantelfläche (11, 12, 21, 22) des Leitelements (R) anregbar sind, und
b. mittels eines Empfängers (SE2, SE3) eines jeden Sender-Empfänger-Paares (SE1, SE2; SE1, SE3) Oberflächenwellen (OW1, OW2, OW3) empfangbar sind, die zumindest teilweise auf akustische Welle (VW1, VW2, ...) zurückgehen, welche durch sich an der Mantelfläche (11, 12, 21, 22) ausbreitende akustische Oberflächenwellen (OW1, OW2, OW3) angeregt werden, sich im Medium (M) ausbreiten und zumindest teilweise wieder als Oberflächenwellen (OW1, OW2, OW3) in die Mantelfläche (11, 12, 21,22) des Leitelements (R) einkoppeln, und

- einer mit den unterschiedlichen Empfängern (SE2, SE3) der ersten und zweiten Sender-Empfänger-Paare (SE1, SE2; SE1, SE3) gekoppelten elektronischen Auswerteeinrichtung, mittels der an den unterschiedlichen Empfängern der ersten und zweiten Sender-Empfänger-Paare (SE1, SE2; SE1, SE3) empfangenen Oberflächenwellen (OW1, OW2, OW3) unter Messung von Laufzeiten unterschiedlicher, die Empfänger erreichender Wellenzüge (SE2, SE3) und/oder unter Ermittlung einer Differenz von Laufzeiten unterschiedlicher, die Empfänger erreichender Wellenzüge (SE2, SE3) physikalische, chemische und/oder biologische Eigenschaften des Mediums (M) bestimmbar sind,

wobei

- ein Sender (SE1) des ersten Sender-Empfänger-Paares (SE1, SE2) eingerichtet und an einer äußeren Mantelfläche (22) des Leitelements (R) angeordnet ist, Oberflächenwellen (OW1, OW2) anzuregen, deren Ausbreitungsrichtung parallel zu der Längserstreckungsrichtung (z) des Leitelements (R) verläuft, **dadurch gekennzeichnet, dass**
- das zweite Sender-Empfänger-Paar (SE1, SE3) derart eingerichtet ist, dass von einem Empfänger (SE3) des zweiten Sender-Empfänger-Paares (SE1, SE3)

a) Oberflächenwellen (OW3) empfangen werden, die sich entlang eines Primärschallpfades ausgehend von einem Sender (SE1) des zweiten Sender-Empfänger-Paares (SE1, SE3) ausschließlich an einer äußeren Mantelfläche (22) entlang helixartig ausgebreitet haben, und
b) Oberflächenwellen (OW3) zu empfangen, die auf in das Medium (M) einkoppelnde Schallanteile der Oberflächenwellen (OW3) des Primärschallpfades zurückgehen, die wieder in die Mantelfläche (22) des Leitelements (R) eingekoppelt haben und sich entlang eines Sekundärschallpfades ebenfalls helixartig ausgebreitet haben, wobei die Steigung der Helix des Primärschallpfades und die Steigung der Helix des Sekundärschallpfades gleich sind, wobei hierfür der Sender (SE1) des zweiten Sender-Empfänger-Paares (SE1, SE3) eingerichtet und derart an der äußeren Mantelfläche (22) des Leitelements (R) angeordnet ist, Oberflächenwellen (OW3) anzuregen, deren Ausbreitungsrichtung auf einen definierten Winkel α zur Längserstreckungsrichtung (z) des Leitelements (R) eingestellt ist, mit 0° < α < 90°.

10. Vorrichtung nach Anspruch 9, **dadurch gekennzeichnet, dass** für eine Schallgeschwindigkeit der angeregten Oberflächenwellen (OW1, OW2, OW3) im Bereich von 600 m/s bis 2000 m/s der Winkel α zwischen 50° und 60° eingestellt ist, insbesondere auf einen Winkel α im Bereich von 51° bis 56°.

11. Vorrichtung nach Anspruch 9, **dadurch gekennzeichnet, dass** für eine Schallgeschwindigkeit der angeregten Oberflächenwellen (OW1, OW2, OW3) im Bereich von 600 m/s bis 1150 m/s der Winkel α zwischen 37° und 45° eingestellt ist, insbesondere auf einen Winkel α im Bereich von 38° bis 44°.

12. Vorrichtung nach einem der Ansprüche 9 bis 11, **dadurch gekennzeichnet, dass** noch wenigstens ein weiteres, drittes Sender-Empfänger-Paar vorgesehen ist, bei dem ein Sender des dritten Sender-Empfänger-Paare eingerichtet und an der äußeren Mantelfläche (22) des Leitelements (R) angeordnet ist, Oberflächenwellen anzuregen, deren Ausbreitungsrichtung auf einen definierten Winkel γ zur Längserstreckungsrichtung (z) des Leitelements (R) eingestellt ist, mit 0° < γ < 90°.

13. Vorrichtung nach Anspruch 12, **dadurch gekennzeichnet, dass** für eine Schallgeschwindigkeit der angeregten Oberflächenwellen (OW1, OW2, OW3) im Bereich von 600 m/s bis 1150 m/s der Winkel γ zwischen 37° und 45° eingestellt ist, insbesondere auf einen Winkel γ im Bereich von 38° bis 44°.

14. Vorrichtung nach einem der Ansprüche 9 bis 13, **dadurch gekennzeichnet, dass** ein Sender und/oder ein Empfänger durch einen Transducer gebildet sind, insbesondere einen Interdigitaltransducer oder einen Wedge-Transducer.

**Claims**

1. A method for determining physical, chemical and/or biological properties of a medium (M) with the aid of at least two transmitter-receiver pairs (SE1, SE2; SE1, SE3) and on the basis of at least one first and one second acoustic wave, wherein the first acoustic wave has propagated at least in part between a first transmitter-receiver pair (SE1, SE2) through the medium (M) and the second acoustic wave has propagated at least in part between a second transmitter-receiver pair (SE1, SE3) through the medium (M), wherein the medium (M) adjoins an inner lateral surface of an elongate conduction element (R) that is arched transversely to its direction of longitudinal extent (z) and wherein

    a. surface waves (OW1, OW2, OW3) are excited at a lateral surface (11, 12, 21, 22) of the conduction element (R) by means of a transmitter (SE1) of each transmitter-receiver pair (SE1, SE2; SE1, SE3),
    b. surface waves (OW1, OW2, OW3) that at least partly arise from a first or second acoustic wave (VW1, VW2,...), which was excited by acoustic surface waves (OW1, OW2, OW3) propagating at the lateral surface (11, 12, 21, 22), which propagated in the medium (M) and which partly coupled back into the lateral surface (11, 12, 21, 22) of the conduction element (R) again as a surface wave (OW1, OW2, OW3), are received by means of a receiver (SE2, SE3) of each transmitter-receiver pair (SE1, SE2;

SE1, SE3), and
    c. physical, chemical and/or biological properties of the medium (M) are determined by means of the surface waves (OW1, OW2, OW3) that were received at the different receivers (SE2, SE3) of the first and second transmitter-receiver pairs (SE1, SE2; SE1, SE3) and by measuring times of flight of different wave trains (SE2, SE3) reaching the receivers and/or by establishing a difference in times of the flight of different wave trains (SE2, SE3) reaching the receivers, wherein surface waves (OW1, OW2) are excited at the lateral surface (22) of the conduction element (R) by a transmitter (SE1) of the first transmitter-receiver pair (SE1, SE2), the main propagation direction of said surface waves extending parallel to the direction of longitudinal extent (z) of the conduction element (R), **characterized in that** surface waves (OW3) are excited at the lateral surface (22) of the conduction element (R) by a transmitter (SE1) of the second transmitter-receiver pair (SE1, SE3), the main propagation direction of said surface waves being set to be at a defined angle α in relation to the direction of longitudinal extent (z) of the conduction element (R), where 0° < α < 90°, wherein a receiver (SE3) of the second transmitter-receiver pair (SE1, SE3)

    (a) receives surface waves (OW3) that, proceeding along a primary sound path starting from a transmitter (SE1) of this second transmitter-receive pair (SE1, SE3), have only propagated along an outer lateral surface (22) in a helical manner, and
    (b) receives surface waves (OW3) which are due to sound components of the surface waves (OW3) of the primary sound path which are coupled into the medium (M), which surface waves (OW3) have coupled back into the lateral surface (22) of the conduction element (R) and have also proceeding in a helical manner along a secondary sound path, wherein the grade of the helix of the primary sound path being equal to the grade of the helix of the secondary sound path.

2. The method as claimed in claim 1, **characterized in that** the angle α is set to between 50° and 60°, in particular set at an angle α in the range from 51° to 56°, for a sound speed of the excited surface wave (OW1, OW2, OW3) in the range from 600 m/s to 2000 m/s.

3. The method as claimed in claim 1, **characterized in that** the angle α is set to between 37° and 45°, in particular set at an angle $\alpha$ in the range from 38° to 44°, for a sound speed of the excited surface wave (OW1, OW2, OW3) in the range from 600 m/s to 1150 m/s.

4. The method as claimed in any one of the preceding claims, **characterized in that**, additionally, at least one further, third transmitter-receiver pair is provided, in which surface waves are excited by a transmitter of the third transmitter-receiver pair, the propagation direction of said surface waves being set to be a defined angle $\gamma$ in relation to the direction of longitudinal extent (z) of the conduction element (R), where 0° < $\gamma$ < 90°.

5. The method as claimed in claim 4, **characterized in that** the angle $\gamma$ is set to between 37° and 45°, in particular set at an angle $\gamma$ in the range from 38° to 44°, for a sound speed of the excited surface wave (OW1, OW2, OW3) in the range from 600 m/s to 1150 m/s.

6. The method as claimed in claim 4 or 5, **characterized in that** a receiver (SE3) of the third transmitter-receiver pair (SE1, SE3) receives surface waves (OW3) that, proceeding also from the transmitter (SE1) of the third transmitter-receive pair (SE1, SE3), have only propagated along an outer lateral surface (22) in a helical manner.

7. The method as claimed in any one of the preceding claims, **characterized in that**, by means of surface waves (OW1, OW2, OW3) that are captured at the different receivers (SE2, SE3) of the first and second transmitter-receiver pairs (SE1, SE2; SE1, SE3), a flow measurement is carried out and a flow speed of the medium (M) through the conduction element (R) is determined.

8. The method as claimed in claim 7, **characterized in that**, on the basis of surface waves (OW1, OW2, OW3) that are captured at the different receivers (SE2, SE3) of the first and second transmitter-receiver pairs (SE1, SE2; SE1, SE3), a flow profile is established and a flow-profile correction is undertaken when determining the flow speed of the medium (M).

9. An apparatus for determining physical, chemical and/or biological properties of a medium, in particular for carrying out a method as claimed in any one of claims 1 to 8, comprising

    - an acoustic waveguide having an elongate conduction element (R) that is arched transversely to its direction of longitudinal extent (z), a medium (M) to be characterized being able to adjoin the latter,

    - at least two transmitter-receiver pairs (SE1, SE2; SE1, SE3), wherein

        a. surface waves (OW1, OW2, OW3) are excitable at a lateral surface (11, 12, 21, 22) of the conduction element (R) by means of a transmitter (SE1) of each transmitter-receiver pair (SE1, SE2; SE1, SE3), and

        b. surface waves (OW1, OW2, OW3) that at least partly arise from acoustic waves (VW1, VW2,...), which are excited by acoustic surface waves (OW1, OW2, OW3) propagating at the lateral surface (11, 12, 21, 22), which propagate in the medium (M) and which partly couple back into the lateral surface (11, 12, 21, 22) of the conduction element (R) again as a surface wave (OW1, OW2, OW3), are receivable by means of a receiver (SE2, SE3) of each transmitter-receiver pair (SE1, SE2; SE1, SE3), and

    - an electronic evaluation device coupled to the different receivers (SE2, SE3) of the first and second transmitter-receiver pairs (SE1, SE2; SE1, SE3), by means of which physical, chemical and/or biological properties of the medium (M) are determinable surface waves (OW1, OW2, OW3) received at different receivers of the first and second transmitter-receiver pairs (SE1, SE2; SE1, SE3) by measuring times of flight of different wave trains (SE2, SE3) reaching the receivers and/or by establishing a difference in times of the flight of different wave trains (SE2, SE3) reaching the receivers,

wherein

    - a transmitter (SE1) of the first transmitter-receiver pair (SE1, SE2) is configured and arranged at an outer lateral surface (22) of the conduction element (R) so as to excite surface waves (OW1, OW2) whose propagation direction extends parallel to the direction of longitudinal extent (z) of the conduction element (R),

**characterized in that**

    - the second transmitter-receiver pair (SE1, SE3) is configured such that a receiver (SE3) of the second transmitter-receiver pair (SE1, SE3)

        a) receives surface waves (OW3) that, proceeding along a primary sound path starting from a transmitter (SE1) of this second transmitter-receive pair (SE1, SE3), have only propagated along an outer lateral surface (22) in a helical manner, and

        b) receives surface waves (OW3) which are due to sound components of the surface waves (OW3) of the primary sound path which are coupled into the medium (M), which surface waves (OW3) have coupled back into the lateral surface (22) of the conduction element (R) and have also proceeding in a helical manner along a secondary sound path, wherein the grade of the helix of the primary sound path being equal to the grade of the helix of the secondary sound path,

wherein for this the transmitter (SE1) of the second transmitter-receiver pair (SE1, SE3) is configured and arranged at the outer lateral surface (22) of the conduction element (R) so as to excite surface waves (OW3) whose propagation direction is set to be at a defined angle $\alpha$ in relation to the direction of longitudinal extent (z) of the conduction element (R), where $0° < \alpha < 90°$.

10. The apparatus as claimed in claim 9, **characterized in that** the angle $\alpha$ is set to between 50° and 60°, in particular set at an angle $\alpha$ in the range from 51° to 56°, for a sound speed of the excited surface wave (OW1, OW2, OW3) in the range from 600 m/s to 2000 m/s.

11. The apparatus as claimed in claim 9, **characterized in that** the angle $\alpha$ is set to between 37° and 45°, in particular set at an angle $\alpha$ in the range from 38° to 44°, for a sound speed of the excited surface wave (OW1, OW2, OW3) in the range from 600 m/s to 1150 m/s.

12. The apparatus as claimed in any one of claims 9 to 11, **characterized in that,** additionally, at least one further, third transmitter-receiver pair is provided, in which a transmitter of the third transmitter-receiver pair is configured and arranged at the outer lateral surface (22) of the conduction element (R) so as to excite surface waves whose propagation direction is set to be a defined angle $\gamma$ in relation to the direction of longitudinal extent (z) of the conduction element (R), where $0° < \gamma < 90°$.

13. The apparatus as claimed in claim 12, **characterized in that** the angle $\gamma$ is set to between 37° and 45°, in particular set at an angle $\gamma$ in the range from 38° to 44°, for a sound speed of the excited surface wave (OW1, OW2, OW3) in the range from 600 m/s to 1150 m/s.

14. The apparatus as claimed in any one of claims 9 to 13, **characterized in that** a transmitter and/or a receiver are formed by a transducer, in particular an interdigital transducer or a wedge transducer.

**Revendications**

1. Procédé de détermination de caractéristiques physiques, chimiques et/ou biologiques d'un milieu (M) à l'aide d'au moins deux paires d'émetteur-récepteur (SE1, SE2 ; SE1, SE3) et sur la base d'au moins une première et d'une deuxième onde acoustique, dans lequel la première onde acoustique s'est propagée au moins en partie entre une première paire d'émetteur-récepteur (SE1, SE2) à travers le milieu (M) et la deuxième onde acoustique s'est propagée au moins en partie entre une deuxième paire d'émetteur-récepteur (SE1, SE3) à travers le milieu (M), dans lequel le milieu (M) jouxte une surface enveloppante intérieure d'un élément de guidage (R) étiré en longueur et bombé de manière transversale par rapport à son sens d'extension longitudinale (z) et dans lequel

a. des ondes de surface (OW1, OW2, OW3) sont excitées sur une surface enveloppante (11, 12, 21, 22) de l'élément de guidage (R) au moyen d'un émetteur (SE1) d'une paire d'émetteur-récepteur (SE1, SE2 ; SE1, SE3) respective,
b. des ondes de surface (OW1, OW2, OW3) sont reçues au moyen d'un récepteur (SE2, SE3) d'une paire d'émetteur-récepteur (SE1, SE2 ; SE1, SE3) respective, lesquelles reviennent en arrière au moins en partie sur une première ou une deuxième onde acoustique (VW1, VW2, ...), laquelle a été excitée par des ondes de surface (OW1, OW2, OW3) acoustiques se propageant sur la surface enveloppante (11, 12, 21, 22), qui s'est propagée dans le milieu (M) et a été injectée au moins en partie à nouveau en tant qu'onde de surface (OW1, OW2, OW3) dans la surface enveloppante (11, 12, 21, 22) de l'élément de guidage (R), et
c. des caractéristiques physiques, chimiques et/ou biologiques du milieu (M) sont déterminées au moyen des ondes de surface (OW1, OW2, OW3) reçues sur les différents récepteurs (SE2, SE3) de la première et de la deuxième paire d'émetteur-récepteur (SE1, SE2 ; SE1, SE3) et en mesurant des temps de propagation de différents trains d'onde (SE2, SE3) atteignant les récepteurs et/ou en calculant une différence de temps de propagation de différents trains d'onde (SE2, SE3) atteignant les récepteurs,

dans lequel

- des ondes de surface (OW1, OW2) sont excitées sur la surface enveloppante (22) de l'élément de guidage (R) par un émetteur (SE1) de la première paire d'émetteur-récepteur (SE1, SE2), dont le sens de propagation principal s'étend de manière parallèle par rapport au sens d'extension longitudinale (z) de l'élément de guidage (R), **caractérisé en ce que**

- des ondes de surface (OW3) sont excitées sur la surface enveloppante (22) de l'élément de guidage (R) par un émetteur (SE1) de la deuxième paire d'émetteur-récepteur (SE1, SE3), dont le sens de propagation principal est réglé sur un angle défini $\alpha$ par rapport au sens d'extension longitudinale (z) de l'élément de guidage (R), avec 0° < $\alpha$ < 90°,

dans lequel

(a) des ondes de surface (OW3), lesquelles se sont propagées de manière hélicoïdale exclusivement le long d'une surface enveloppante extérieure (22) le long d'un chemin acoustique primaire en partant de l'émetteur (SE1) de ladite deuxième paire d'émetteur-récepteur (SE1, SE3), et
(b) des ondes de surface (OW3), lesquelles reviennent en arrière sur des fractions de son, injectées dans le milieu (M), des ondes de surface (OW3) du chemin acoustique primaire, qui sont injectées à nouveau dans la surface enveloppante (22) de l'élément de guidage (R) et se sont propagées également de manière hélicoïdale le long d'un chemin acoustique secondaire,
sont reçues respectivement par un récepteur (SE3) de la deuxième paire d'émetteur-récepteur (SE1, SE3),
dans lequel
le pas de l'hélice du chemin acoustique primaire et le pas de l'hélice du chemin acoustique secondaire sont identiques.

2. Procédé selon la revendication 1, **caractérisé en ce que** l'angle $\alpha$ est réglé entre 50° et 60°, en particulier sur un angle $\alpha$ dans la plage de 51° à 56°, pour une vitesse du son des ondes de surface (OW1, OW2, OW3) excitées dans la plage de 600 m/s à 2000 m/s.

3. Procédé selon la revendication 1, **caractérisé en ce que** l'angle $\alpha$ est réglé entre 37° et 45°, en particulier sur un angle $\alpha$ dans la plage de 38° à 44°, pour une vitesse du son des ondes de surface (OW1, OW2, OW3) excitées dans la plage de 600 m/s à 1150 m/s.

4. Procédé selon l'une quelconque des revendications précédentes, **caractérisé en ce qu'**encore au moins une autre troisième paire d'émetteur-récepteur est prévue, où sont excitées par un émetteur de la troisième paire d'émetteur-récepteur, des ondes de surface, dont le sens de propagation est réglé sur un angle $\gamma$ défini par rapport au sens d'extension longitudinale (z) de l'élément de guidage (R), avec 0° < $\gamma$ < 90°.

5. Procédé selon la revendication 4, **caractérisé en ce que** l'angle $\gamma$ est réglé entre 37° et 45°, en particulier sur un angle $\gamma$ dans la plage de 38° à 44°, pour une vitesse du son des ondes de surface (OW1, OW2, OW3) excitées dans la plage de 600 m/s à 1150 m/s.

6. Procédé selon la revendication 4 ou 5, **caractérisé en ce que** sont reçues par un récepteur (SE3) de la troisième paire d'émetteur-récepteur (SE1, SE3) des ondes de surface (OW3), qui se sont propagées de manière hélicoïdale exclusivement le long d'une surface enveloppante extérieure (22) également en partant de l'émetteur (SE1) de la troisième paire d'émetteur-récepteur (SE1, SE3).

7. Procédé selon l'une quelconque des revendications précédentes, **caractérisé en ce qu'**une mesure de débit est effectuée au moyen des ondes de surface (OW1, OW2, OW3) reçues sur les différents récepteurs (SE2, SE3) de la première et de la deuxième paire d'émetteur-récepteur (SE1, SE2 ; SE1, SE3) et une vitesse d'écoulement du milieu (M) à travers l'élément de guidage (R) est déterminée.

8. Procédé selon la revendication 7, **caractérisé en ce qu'**un profil d'écoulement est calculé sur la base des ondes de surface (OW1, OW2, OW3) reçues sur les différents récepteurs (SE2, SE3) de la première et de la deuxième paire d'émetteur-récepteur (SE1, SE2 ; SE1, SE3) et une correction du profil d'écoulement est réalisée lors de la détermination de la vitesse d'écoulement du milieu (M).

9. Dispositif de détermination de caractéristiques physiques, chimiques et/ou biologiques d'un milieu, en particulier pour effectuer un procédé selon l'une quelconque des revendications 1 à 8, avec

- un guide d'ondes acoustiques avec un élément de guidage (R) étiré en longueur et bombé de manière transversale par rapport à son sens d'extension longitudinale (z), auquel un milieu (M) à caractériser peut être adjacent,
- au moins deux paires d'émetteur-récepteur (SE1, SE2 ; SE1, SE3), dans lequel

a. des ondes de surface (OW1, OW2, OW3) peuvent être excitées sur une surface enveloppante (11, 12, 21, 22) de l'élément de guidage (R) au moyen d'un émetteur (SE1) d'une paire d'émetteur-récepteur (SE1, SE2 ; SE1, SE3) respective, et
b. des ondes de surface (OW1, OW2, OW3) peuvent être reçues au moyen d'un récepteur (SE2, SE3) d'une paire d'émetteur-récepteur (SE1, SE2 ; SE1, SE3) respective, lesquelles reviennent en arrière au moins en partie sur des ondes acoustiques (VW1, VW2, ...), lesquelles sont excitées par des ondes de surface (OW1, OW2, OW3) acoustiques se propageant sur la surface enveloppante (11, 12, 21, 22), se propagent dans le milieu (M) et sont injectées au moins en partie à nouveau en tant qu'ondes de surface (OW1, OW2, OW3) dans la surface enveloppante (11, 12, 21, 22) de l'élément de guidage (R), et

- un système d'évaluation électronique couplé aux différents récepteurs (SE2, SE3) de la première et de la deuxième paire d'émetteur-récepteur (SE1, SE2 ; SE1, SE3), au moyen de laquelle des caractéristiques physiques, chimiques et/ou biologiques du milieu (M) peuvent être déterminées au moyen des ondes de surface (OW1, OW2, OW3) reçues sur les différents récepteurs de la première et de la deuxième paire d'émetteur-récepteur (SE1, SE2 ; SE1, SE3) en mesurant des temps de propagation de différents trains d'onde (SE2, SE3) atteignant les récepteurs et/ou en calculant une différence de temps de propagation de différents trains d'onde (SE2, SE3) atteignant les récepteurs,

dans lequel

- un émetteur (SE1) de la première paire d'émetteur-récepteur (SE1, SE2) est mis au point et est disposé sur une surface enveloppante extérieure (22) de l'élément de guidage (R) pour exciter des ondes de surface (OW1, OW2), dont le sens de propagation s'étend de manière parallèle par rapport au sens d'extension longitudinale (z) de l'élément de guidage (R), **caractérisé en ce que**
- la deuxième paire d'émetteur-récepteur (SE1, SE3) est mise au point de manière à recevoir par un récepteur (SE3) de la deuxième paire d'émetteur-récepteur (SE1, SE3)

a) des ondes de surface (OW3), lesquelles se sont propagées à la manière d'une hélice exclusivement le long d'une surface enveloppante extérieure (22) le long d'un chemin acoustique primaire en partant d'un émetteur (SE1) de la deuxième paire d'émetteur-récepteur (SE1, SE3), et
b) des ondes de surface (OW3), qui reviennent en arrière sur des fractions de son injectées dans le milieu (M) des ondes de surface (OW3) du chemin acoustique primaire, qui sont injectées à nouveau dans la surface enveloppante (22) de l'élément de guidage (R) et se sont propagées également à la manière d'une hélice le long d'un chemin acoustique secondaire, dans lequel

le pas de l'hélice du chemin acoustique primaire et le pas de l'hélice du chemin acoustique secondaire sont identiques, dans lequel à cet effet l'émetteur (SE1) de la deuxième paire d'émetteur-récepteur (SE1, SE3) est mis au point et est disposé sur la surface enveloppante extérieure (22) de l'élément de guidage (R) de manière à exciter des ondes de surface (OW3), dont le sens de propagation est réglé sur un angle $\alpha$ défini par rapport au sens d'extension longitudinale (z) de l'élément de guidage (R), avec $0° < \alpha < 90°$.

10. Dispositif selon la revendication 9, **caractérisé en ce que** l'angle $\alpha$ est réglé entre 50° et 60°, en particulier sur un angle $\alpha$ dans la plage de 51° à 56°, pour une vitesse du son des ondes de surface (OW1, OW2, OW3) excitées dans la plage de 600 m/s à 2000 m/s.

11. Dispositif selon la revendication 9, **caractérisé en ce que** l'angle $\alpha$ est réglé entre 37° et 45°, en particulier sur un angle $\alpha$ dans la plage de 38° à 44°, pour une vitesse du son des ondes de surface (OW1, OW2, OW3) excitées dans la plage de 600 m/s à 1150 m/s.

12. Dispositif selon l'une quelconque des revendications 9 à 11, **caractérisé en ce qu'**est prévue encore au moins une autre troisième paire d'émetteur-récepteur, où un émetteur de la troisième paire d'émetteur-récepteur est mis au point et est disposé sur la surface enveloppante extérieure (22) de l'élément de guidage (R) pour exciter des ondes de surface, dont le sens de propagation est réglé sur un angle $\gamma$ défini par rapport au sens d'extension longitudinale (z) de l'élément de guidage (R), avec $0° < \gamma < 90°$.

13. Dispositif selon la revendication 12, **caractérisé en ce que** l'angle $\gamma$ est réglé entre 37° et 45°, en particulier sur un angle $\gamma$ dans la plage de 38° à 44°, pour une vitesse du son des ondes de surface (OW1, OW2, OW3) excitées dans la plage de 600 m/s à 1150 m/s.

14. Dispositif selon l'une quelconque des revendications 9 à 13, **caractérisé en ce qu'**un émetteur et/ou un récepteur sont formés par un transducteur, en particulier un transducteur internumérique ou un transducteur d'angle.

# FIG 1

# FIG 2A

# FIG 2B

# FIG 3A

FIG 3B

## FIG 4    Stand der Technik

EP 3 405 780 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034878 A2
- DE 19503714 A1
- EP 2072972 A1
- EP 2386835 A1
- US 4300401 A
- EP 2343548 A
- DE 102009048646

**In der Beschreibung aufgeführte Nicht-Patentliteratur**

- A three-path ultrasonic flow meter with fluid velocity profile identification. *Meas. Sci. Technol.,* 1991, vol. 2, 635-643